# EUROPÄISCHE PATENTANMELDUNG

(11) **EP 1 310 312 A1**
(43) Veröffentlichungstag der Anmeldung: **14.05.2003**
(21) Anmeldenummer: 02024372.1
(22) Anmeldetag: 02.11.2002
(51) Int. Cl.: B23B 51/02

(54) **Bohrwerkzeug**

(30) Priorität: 12.11.2001 DE 10156485; 15.04.2002 DE 10217250; 09.07.2002 DE 10231382
(71) Anmelder: Kemmer Hartmetallwerkzeuge GmbH, 72218 Wildberg (DE)
(72) Erfinder: Kemmer, Klaus, 72218 Wildberg (DE)
(74) Vertreter: Grosse, Rainer, Dipl.-Ing.

(57) **Zusammenfassung**

Es wird ein insbesondere dreischneidiges Bohr- beziehungsweise Aufbohrwerkzeug (1) mit einem einen Spiralnutbereich (11) aufweisenden Schaft (5) mit einer Stirngeometrie vorgeschlagen. Das Bohr- beziehungsweise Aufbohrwerkzeug (1) zeichnet sich dadurch aus, dass die Stirngeometrie an einem wechselbaren Wechselkopf (7) angeordnet ist und dass zwischen dem Schaft (5) und dem Wechselkopf (7) Drehmomentübertragungsmittel vorgesehen sind.

## Beschreibung

Die Erfindung betrifft ein vorzugsweise mindestens eine Schneide, insbesondere drei Schneiden aufweisendes Bohr- beziehungsweise Aufbohrwerkzeug, gemäß Oberbegriff des Anspruchs 1, ein Bohr- beziehungsweise Aufbohrwerkzeug gemäß Oberbegriff des Anspruchs 12 sowie ein Bohr- beziehungsweise Aufbohrwerkzeug gemäß Oberbegriff des Anspruchs 13.

Werkzeuge der hier angesprochenen Art sind bekannt. Sie dienen der spanabtragenden Bearbeitung von Werkstücken und umfassen einen Schaft, der einen Spiralnutbereich und eine mehrere Schneiden umfassende Stirngeometrie aufweist. Die Stirngeometrie und der Spiralnutbereich werden durch Schleifen aus einem Vollmaterial, beispielsweise Hartmetall, herausgearbeitet. Die Stirngeometrie des Werkzeugs, insbesondere dessen Schneiden, unterliegt beziehungsweise unterliegen Verschleiß, so dass sie nach einer gewissen Zeit nachgeschärft und nachbeschichtet werden muss beziehungsweise müssen. Aufgrund der komplizierten Stirngeometrie kann dies nur in Spezialschleifereien erfolgen. Nachteilig hierbei ist, dass bei der Verwendung des Werkzeugs in Werkzeugmaschinen ein dreifacher Werkzeugbestand erforderlich ist, da üblicherweise ein Werkzeug sich in der Maschine befindet, ein zweites beim Nachschärfen/-beschichten und ein drittes Bohrwerkzeug zur Reserve. Dies führt zu hohen Umlauf- und Bestandskosten. Ein weiterer Nachteil der bekannten Werkzeuge besteht darin, dass die Werkzeugwechselzeiten relativ groß sind und demgemäss auch die Stillstandszeit der Werkzeugmaschine.

Es ist Aufgabe der Erfindung, ein Bohr- beziehungsweise Aufbohrwerkzeug der eingangs genannten Art zu schaffen, das die oben genannten Nachteile nicht aufweist.

Zur Lösung der Aufgabe wird ein Bohr- und/oder Aufbohrwerkzeug mit den Merkmalen des Anspruchs 1 vorgeschlagen. Es zeichnet sich dadurch aus, dass die Stirngeometrie an einem wechselbaren Wechselkopf angeordnet ist, und dass zwischen dem Schaft und dem Wechselkopf Drehmomentübertragungsmittel vorgesehen sind. Aufgrund dieser Ausgestaltung kann bei einer Beschädigung oder einem Verschleiß der Stirngeometrie, insbesondere der Schneiden, diese sehr schnell und in einfacher Weise ausgewechselt werden, ohne dass dazu das gesamte Bohr- beziehungsweise Aufbohrwerkzeug der Werkzeugmaschine entnommen werden muss. Das heißt, der Schaft des Bohrbeziehungsweise Aufbohrwerkzeugs, der üblicherweise mittels einer Spanneinrichtung in der Werkzeugmaschine gehalten wird, bleibt bei einem Austausch des Wechselkopfs eingespannt, so dass eine zeitaufwendige Justierung des Werkzeugs nicht erforderlich ist. Dadurch, dass ein Auswechseln der Stirngeometrie des Bohr- beziehungsweise Aufbohrwerkzeugs in sehr kurzer Zeit und in einfacher Weise möglich ist, kann die Stillstandszeit der Werkzeugmaschine verringert und damit deren Produktivität erhöht werden. Vorteilhaft ist ferner, dass für jede Werkzeugmaschine nicht mehrere komplette Bohr- beziehungsweise Aufbohrwerkzeuge bereitgestellt werden müssen, da üblicherweise lediglich die Stirngeometrie verschleißt und demgemäss erneuert beziehungsweise ausgewechselt werden muss.

Das erfindungsgemäße Bohr- beziehungsweise Aufbohrwerkzeug umfasst Bohr- beziehungsweise Aufbohrwerkzeuge mit einer und mehr als einer Schneide, das heißt, das Bohr- beziehungsweise Aufbohrwerkzeug kann zum Beispiel zwei, drei, vier oder noch weitere Schneiden aufweisen, wobei Bohr- beziehungsweise Aufbohrwerkzeuge mit drei Schneiden bevorzugt sind.

Nach einer Weiterbildung der Erfindung ist vorgesehen, dass ein erstes Drehmomentübertragungsmittel von einem von einer ersten Trennfläche des Schafts oder einer zweiten Trennfläche des Wechselkopfs ausgehenden Vorsprung und ein zweites Drehmomentübertragungsmittel von einer in die zweite oder die erste Trennfläche hineingehende Ausnehmung gebildet sind, wobei im montierten Zustand des Wechselkopfs der Vorsprung in der Ausnehmung angeordnet ist. Der Vorsprung und die Ausnehmung bilden also eine Zapfen-Loch-Verbindung, die relativ einfach und damit kostengünstig herstellbar ist. Der Vorsprung kann also sowohl am Schaft als auch am Wechselkopf angeordnet werden, wobei je nach dem an welchem der beiden Funktionselemente (Schaft, Wechselkopf) sich der Vorsprung befindet, die Ausnehmung am jeweils anderen Funktionselement angeordnet ist. Der Vorsprung und gegebenenfalls auch die Ausnehmung sind vorzugsweise in einem Bereich ihrer Trennfläche angeordnet, in der der Schaft beziehungsweise der Wechselkopf -im Querschnitt gesehen- eine relativ große Materialstärke aufweist, also dickwandig ausgebildet ist, so dass auch bei der Übertragung von hohen Drehmomenten vom Schaft zum Wechselkopf beziehungsweise vom Wechselkopf zum Schaft eine feste und sichere Verbindung zwischen Wechselkopf und Schaft gewährleistet werden kann.

Nach einer Weiterbildung der Erfindung ist vorgesehen, dass mehrere erste sowie mehrere zweite Drehmomentübertragungsmittel vorgesehen sind, wobei jeweils ein erstes und ein zweites Drehmomentübertragungsmittel miteinander zusammenwirken. Die ersten und zweiten Drehmomentübertragungsmittel können wie die oben beschriebenen Drehmomentübertragungsmittel ausgebildet sein.

Bei einem vorteilhaften Ausführungsbeispiel ist vorgesehen, dass der Vorsprung und die Ausnehmung eine Längserstreckung in radiale Richtung zur Drehachse aufweisen. Dadurch kann der Flächenbereich, in dem der Vorsprung und die Ausnehmung aneinander liegen und der die Drehmomentübertragung bewirkt relativ groß ausgebildet werden. Aufgrund des großen Flächenbereichs ergibt sich im Betrieb eine relativ geringe Bauteilbelastung im Bereich der Drehmomentübertragungsmittel. Vorteilhaft ist es, wenn der Vorsprung und die Ausnehmung in Richtung ihrer Längserstreckung geradlinig ausgebildet sind. Vorteilhaft ist es ferner, wenn sich der Vorsprung und die Ausnehmung bis an die Außenumfangsfläche des Bohr-/Aufbohrwerkzeugs erstrecken. Jede dieser beiden Maßnahmen führt zu einem geringen fertigungstechnischen Aufwand bei der Herstellung des Bohr/Aufbohrwerkzeugs. Ferner ergeben sich günstige Drehmomentübertragungsverhältnisse, da keine Kraftaufteilung mit nicht oder nicht hinreichend der Drehmomentübertragung dienenden Komponenten auftritt.

Sofern die Außenkontur des Vorsprungs und die Innenkontur der Ausnehmung eckig, bevorzugt trapezförmig, also mit trapezförmigen Querschnittsstrukturen ausgebildet sind, wobei die Trapezwinkel beider Seiten zur größeren Grundlinie beziehungsweise kleineren Dachlinie bevorzugt gleich groß sind, die Grundlinie bevorzugt rechtwinklig zur Drehachse verläuft, die Trennflächen bevorzugt rechtwinklig zur Drehachse verlaufen und mit der Grundlinie zusammenfallen und insbesondere eine derartige Drehmomentübertragungsgeometrie vorliegt, bei der der jeder Schneide zugeordnete Schaftsektor (Spiralstegbereich) eine Vorsprungs/Ausnehmungsanordnung zugeordnet ist, ergibt sich eine besonders bevorzugte Ausführungsform.

Der Gegenstand der Erfindung betrifft auch ein Bohr- beziehungsweise Aufbohrwerkzeug mit den Merkmalen des Anspruchs 8 und ein Bohr- beziehungsweise Aufbohrwerkzeug mit den Merkmalen des Anspruchs 9, die insbesondere den Vorteil aufweisen, dass sie auch bei geringen Wand-/Materialstärken des Schafts und des Wechselkopfs in deren Verbindungsbereich die Übertragung hoher Drehmomente ermöglichen.

Nach einem bevorzugten Ausführungsbeispiel der Erfindung ist vorgesehen, dass ein erstes Drehmomentübertragungsmittel mindestens einen Vorsprung aufweist, der am Schaft angeordnet ist und von der einen Trennfläche ausgeht und dass ein zweites Drehmomentübertragungsmittel mindestens eine Ausnehmung aufweist, die am Wechselkopf ausgebildet ist und von der anderen Trennfläche ausgeht. Mithin ist der mindestens eine Vorsprung dem Schaft zugeordnet und die mindestens eine Ausnehmung dem Wechselkopf. Der Vorsprung ragt in eine Richtung, die parallel zur Längsmittelachse des Werkzeugs verläuft. Die Ausnehmung ist entsprechend der Formgebung und Lage des Vorsprungs am Wechselkopf ausgebildet. Wird der Wechselkopf dem Schaft axial zugeordnet und mittels geeigneter Befestigungsmittel befestigt, so greifen Vorsprung und Ausnehmung spielfrei zum axialen und radialen Ausrichten von Schaft und Wechselkopf und zur Drehmomentübertragung ineinander.

Bevorzugt sind mehrere Vorsprünge und entsprechend mehrere Ausnehmungen vorgesehen. Die Vorsprünge und Ausnehmungen liegen bevorzugt gleichmäßig winkelbeabstandet zueinander, dass heißt, sie sind um die Längsmittelachse des Werkzeugs herum angeordnet. Insbesondere kann vorgesehen sein, dass drei, um 120° winkelversetzt zueinander liegende Vorsprünge und entsprechende Ausnehmungen vorhanden sind.

Die Drehmomentübertragungsmittel gehen vom äußeren Rand des Schaftes und auch vom äußeren Rand des Wechselkopfs aus. Dies bedeutet, dass vom äußeren Rand des Schaftes die Vorsprünge ausgehen beziehungsweise der mindestens eine Vorsprung ausgeht und radial in Richtung auf die Längsmittelachse verlaufen/verläuft. Entsprechendes gilt für die Ausnehmungen, dass heißt, sie beginnen am äußeren Rand des Wechselkopfs und verlaufen radial nach innen in Richtung auf die Längsmittelachse des Werkzeugs. Entsprechendes gilt für nur eine Ausnehmung. Alternativ ist es möglich, dass sowohl der Vorsprung beziehungsweise die Vorsprünge und die Ausnehmung beziehungsweise die Ausnehmungen nicht vom äußeren Rand von Schaft und Wechselkopf ausgehen, sondern beabstandet zu den Rändern liegen. Letzteres bedeutet, dass die Vorsprünge und Ausnehmungen bei einem Blick von außen auf das Werkzeug nicht sichtbar sind und sich die Drehmomentübertragung nicht bis zum äußeren Rand erstreckt.

Bevorzugt verlaufen die Drehmomentübertragungsmittel vom äußeren Rand des Schaftes beziehungsweise vom äußeren Rand des Wechselkopfs ausgehend bis zu einer gedachten Umkreislinie, dass heißt sie erstrecken sich radial nicht bis zur Längsmittelachse des Werkzeugs, sondern nur bis zu der gedachten Umkreislinie, deren Mittelpunkt auf der Längsmittelachse liegt. Insofern lassen die Drehmomentübertragungsmittel einen zentralliegenden Bereich frei, so dass in diesem Freiraum die Befestigungsmittel für ein auswechselbares Befestigen des Wechselkopfs am Schaft untergebracht werden können.

Insbesondere ist vorgesehen, dass der Vorsprung nicht überall dieselbe Höhe aufweist, sondern -in radialer Richtung von außen nach innen gesehenkleiner wird. Dementsprechend sind die die Drehmomentübertragung bewirkenden Seiten von Vorsprung und Ausnehmung ausgestaltet. Dort, wo ein größerer Radius des Werkzeugs vorliegt, weist der Vorsprung somit eine größere Höhe auf, als weiter innen liegend in einem Bereich, in dem ein kleinerer Radius vorliegt und dementsprechend auch eine geringere Höhe des Vorsprungs existiert. Entsprechendes gilt für die Ausbildung der zugeordneten Ausnehmung, das heißt, die Tiefe der Ausnehmung ist radial weiter außen liegend größer als in Bereichen, die radial weiter innen liegen. Insbesondere kann vorgesehen sein, dass sich die Höhe des Vorsprungs nach innen hin kontinuierlich verkleinert. Dementsprechend verkleinert sich die Tiefe der Ausnehmung von außen nach innen, vorzugsweise ebenfalls kontinuierlich. In einem solchen Falle ist die Dachfläche des Vorsprungs als schräge Ebene ausgebildet und entsprechend bildet der Grund der Ausnehmung eine schräge Ebene.

Die Ausgestaltung mit weiter außen liegender größerer Vorsprungshöhe hat zur Folge, dass bei einer Drehmomentübertragung dort größere Seitenflächen von Vorsprung und Ausnehmung aneinander liegen, wo auch größere Drehmomente zu übertragen sind. Naturgemäß nimmt der Drehmomentverlauf bei der Kraftübertragung vom Schaft zum Wechselkopf von außen nach innen ab. Aufgrund der entsprechend unterschiedlichen Höhe von Vorsprung und entsprechend ausgebildeter Tiefe der Ausnehmung ist sichergestellt, dass eine sichere Drehmomentübertragung vom Schaft zum Wechselkopf stattfindet, ohne dass es zu einem "Überdrehen kommt", dass heißt, dass der mindestens eine Vorsprung aus seiner zugehörigen Ausnehmung herausgedrängt wird und eine Relativdrehung zwischen Schaft und Wechselkopf stattfindet, bis ein erneutes Einrasten des Vorsprungs in eine andere oder die Ausnehmung erfolgt.

Ferner ist es vorteilhaft, wenn die im Wesentlichen radial verlaufenden Seiten des Vorsprungs -in Richtung auf den Wechselkopf gesehen- zueinander konvergieren. Dementsprechend divergieren die Seiten der Ausnehmung (Blickrichtung vom Wechselkopf in Richtung auf den Schaft). Dabei ist insbesondere vorgesehen, dass die Seiten des Vorsprungs als ebene Flächen und die entsprechende Seitenwandungen der Ausnehmung ebenfalls als ebene Flächen/ausgebildet sind. Das Konvergieren der Seiten des Vorsprungs kann dadurch erfolgen, dass beide Seiten zur Trennfläche einen Winkel aufweisen, der größer als 90° ist. Insbesondere ist dabei vorgesehen, dass die Vorsprünge -im Querschnitt betrachteteine gleichmäßige Trapezform aufweisen. Alternativ kann auch eine ungleichmäßige Trapezform vorliegen, dass heißt, die beiden Winkel der Seiten sind ungleich groß in Bezug auf die dazugehörige Trennfläche. Ein Konvergieren der Seiten des Vorsprungs ist jedoch auch dadurch gegeben, wenn eine Seite zur Trennfläche einen 90°-Winkel einschließt und die andere Seite einen Winkel, der größer als 90° ist. In Bezug auf die Drehrichtung des Drehmoments ist es von Vorteil, wenn es auf die Seite des Vorsprungs und der Ausnehmung wirkt, die einen Winkel von 90° zur zugeordneten Trennfläche aufweist. Auf diese Art und Weise ist das zuvor erwähnte "Überdrehen" noch sicherer verhindert, da keine Schrägflächen aufeinander liegen, die die Tendenz haben, sich relativ zueinander zu bewegen, dass heißt, eine Bewegung des Wechselkopfs in axialer Richtung relativ zum Schaft begünstigen, wenn sehr große Drehmomente aufzubringen sind.

Es ist vorteilhaft, wenn zum spielfreien, radialen und axialen Zusammengreifen die Ausnehmung dem Vorsprung in der Formgebung formangepasst ausgebildet ist. Vorzugsweise liegen hierbei große Flächenkontakte vor. Dies begünstigt eine sichere Drehmomentübertragung und stellt überdies eine exakte Ausrichtung des Wechselkopfs zum Schaft in radialer und axialer Richtung sicher. Insbesondere ist vorgesehen, dass die beiden schräg verlaufenden Seitenflächen des Vorsprungs die schräg verlaufenden Seitenflächen der zugehörigen Ausnehmung berühren und zwischen den Trennebenen von Wechselkopf und Schaft noch ein geringer Abstand oder kein Abstand mehr ist, so dass beim Verspannen von Wechselkopf und Schaft in axialer Richtung ein sehr strammes Aufeinanderziehen der Schrägflächen von Vorsprung und Ausnehmung erfolgt.

Ferner ist es vorteilhaft, wenn der Wechselkopf mittels lösbarer Befestigungsmittel am Schaft auswechselbar gehalten ist. Hierauf wurde vorstehend schon eingegangen. Dabei kann insbesondere vorgesehen sein, dass das Befestigungsmittel ein Gewindebolzen/eine Gewindeschraube ist, die eine zentrale Durchgangsöffnung des Wechselkopfs durchgreift, sich mit einem Kopf oder einer Stufe am Wechselkopf abstützt und in eine zentrale Gewindebohrung des Schaftes eingeschraubt ist. Der Kopf beziehungsweise die Stufe liegt vorzugsweise versenkt im Wechselkopf. Mithin ist eine Senkbohrung zur Kopf- beziehungsweise Stufenaufnahme am Wechselkopf in Richtung der Längsmittelachse vorgesehen. In diesem Bereich kann somit keine Schneide des Werkzeugs ausgebildet sein, so dass hier bevorzugt die Bauform eines Aufbohrwerkzeugs vorliegt, das nur periphere Schneiden benötigt.

Weitere vorteilhafte Ausführungsformen ergeben sich aus den in den Unteransprüchen genannten Merkmale.

Die Erfindung wird im Folgenden anhand der Zeichnung näher erläutert. Es zeigen:
- Figuren 1 und 2: jeweils eine Ansicht eines Ausführungsbeispiels des Werkzeugschafts eines Bohr/Aufbohrwerkzeugs;
- Figuren 3 und 4: jeweils eine Ansicht eines für den in den Figuren 1 und 2 dargestellten Schaft vorgesehenen Wechselkopfs;
- Figuren 5 und 6: jeweils eine Ansicht eines weiteren Ausführungsbeispiels des Werkzeugschafts;
- Figuren 7 bis 12: jeweils eine weitere Ausführungsform des Wechselkopfs;
- Figur 13: eine Seitenansicht eines weiteren Ausführungsbeispiels des erfindungsgemäßen Bohr- beziehungsweise Aufbohrwerkzeugs, teilweise geschnitten;
- Figur 14: ein weiteres Ausführungsbeispiel eines Bohr- beziehungsweise Aufbohrwerkzeugs;
- Figur 15: eine schematische Detailansicht des Ausführungsbeispiels der Figur 14;
- Figur 16: einen Auszug des Ausführungsbeispiels der Figur 14;
- Figur 17: ebenfalls einen Auszug des Ausführungsbeispiels der Figur 14;
- Figur 18: ein weiteres Ausführungsbeispiel eines Bohr- beziehungsweise Aufbohrwerkzeugs;
- Figur 19: eine Detailansicht des Ausführungsbeispiels der Figur 18;
- Figur 20: einen Auszug des Ausführungsbeispiels der Figur 18 und
- Figur 21: einen Auszug des Ausführungsbeispiels der Figur 18.

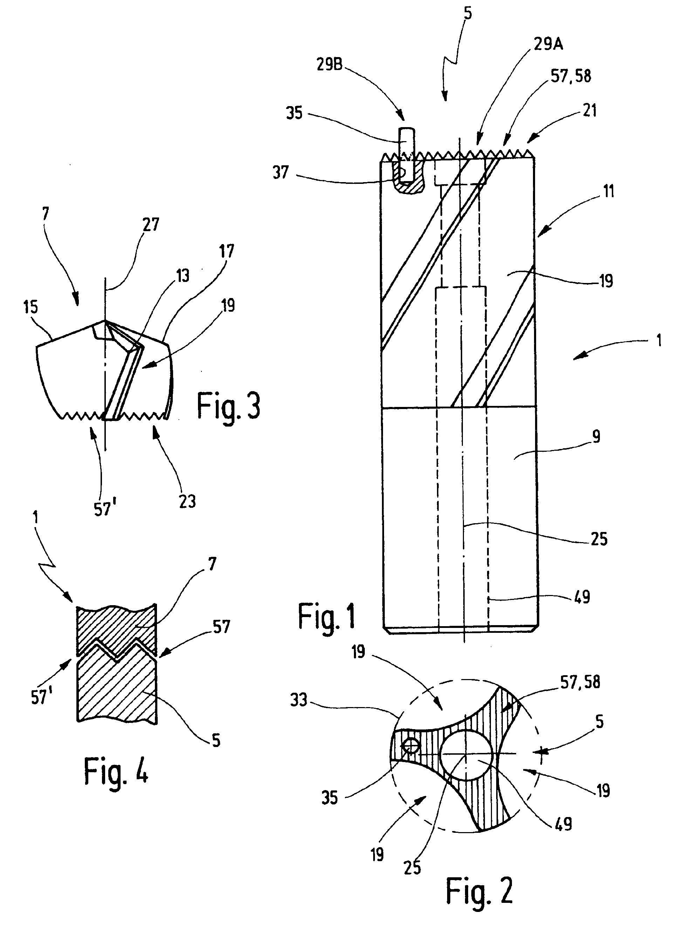

Figur 1 zeigt eine Seitenansicht eines Ausführungsbeispiels eines Schafts 5 des dreischneidigen Bohr/Aufbohrwerkzeugs 1, mittels dem ein bestehendes Loch aufgebohrt oder ins Volle gebohrt werden kann. Während der Bearbeitung eines Werkstücks werden davon Späne abgetragen. Dabei führt in der Regel das Bohr-/Aufbohrwerkzeug 1 eine kreisförmige Schnittbewegung und gleichzeitig eine Vorschubbewegung in Richtung seiner Drehachse aus. In einigen Fällen erfolgt die Schnittbewegung durch das umlaufende Bauteil, zum Beispiel beim Bohren auf einer Drehmaschine.

Das Bohr- und Aufbohrwerkzeug umfasst den Schaft 5 und einen endseitigen daran angeordneten, wechselbaren Wechselkopf 7 (Figur 3). Der Schaft 5 weist einen Spannbereich 9 und einen Spiralnutbereich 11 mit drei Spiralnuten (Spannuten) und drei zwischen den Spiralnuten liegenden Spiralstegen auf. Im Spannbereich 9 wird der Schaft 5 mittels einer geeigneten Spanneinrichtung einer Werkzeugmaschine, Spannvorrichtung oder dergleichen gehalten. Das Werkzeug 1 ist hier als Dreischneider ausgebildet, das heißt, der Wechselkopf 7 weist drei Schneiden 13, 15, 17 auf, wie insbesondere aus Figur 3 ersichtlich. Im Stirnbereich bilden die drei Schneiden 13, 15, 17 Hauptschneiden; im Schaftbereich Nebenschneiden.

Das Werkzeug 1 umfasst ferner eine der Anzahl der Schneiden 13, 15 und 17 entsprechende Anzahl von schraubenförmigen Spannuten 19 auf, also drei Stück, die die Abfuhr der Späne ermöglichen. Die Spannuten 19 sind -wie die Schneiden 13 bis 17- in Umfangsrichtung des Werkzeugs 1 gleichmäßig verteilt angeordnet, also in einem Abstand von 120°.

Der Schaft 5 weist eine erste Trennfläche 21 auf, die eben und rechtwinklig zur Drehachse ausgebildet ist und an der der Wechselkopf 7 im montierten Zustand mit einer ebenfalls eben ausgebildeten zweiten Trennfläche 23 anliegt. Die Trennflächen 21, 23 befinden sich an jeweils einer Stirnfläche des Schafts 5 beziehungsweise des Wechselkopfs 7. Die Schnittstelle zwischen Schaft 5 und Wechselkopf 7 ist durch eine Trennebene angedeutet, in der sich die Trennflächen 21, 23 befinden. Die Trennebene verläuft orthogonal zur Längsmittelachse/Drehachse des Werkzeugs 1, die wiederum mit der Längsmittelachse 25 des Schafts 5 und der Längsmittelachse 27 des Wechselkopfs 7 zusammenfällt.

Bei dem in Figur 1 dargestellten Schaft 5 ist die Trennfläche 21 nicht eben ausgebildet, sondern mit einer Verzahnung 57 versehen, die die gesamte Trennfläche 21 bedeckt, wie aus Figur 2, die eine Draufsicht auf die Trennfläche 21 des in Figur 1 dargestellten Schafts 5 zeigt, ersichtlich. Die Verzahnung 57 ist als Linearkerbverzahnung 58 ausgebildet, das heißt, sie weist gerade verlaufende Vertiefungen auf, die in Seitenansicht gesehen V-förmig ausgebildet sind. Die Querschnittsform der Vertiefungen/Nuten ist variierbar, also nicht auf das in den Figuren 1 und 2 dargestellte Ausführungsbeispiel beschränkt.

Die Linearkerbverzahnung 58 bedeckt bei diesem Ausführungsbeispiel die gesamte Trennfläche 21 und bildet einen Teil der ersten Drehmomentübertragungsmittel zur drehfesten Kopplung des Wechselkopfs 7 an dem Schaft 5. Bei einer anderen Ausführungsform ist die Verzahnung 57 lediglich in einem Teilbereich der Trennfläche 21, vorzugsweise im mittleren Bereich des Schafts 5, wo dessen Wandstärken am größten sind.

In Figur 3 ist in Seitenansicht ein Ausführungsbeispiel des Wechselkopfs 7 dargestellt, der für den in den Figuren 1 und 2 dargestellten Schaft 5 vorgesehen ist. Der Wechselkopf 7 ist an seiner Trennfläche 23 mit einer der Verzahnung 57 des Schafts 5 entsprechenden Verzahnung 57', also einer Linearkerbverzahnung versehen. Bei auf den Schaft 5 aufgesetztem Wechselkopf 7 greifen die Verzahnungen 57, 57' ineinander, wodurch eine drehfeste Kopplung des Wechselkopfs 7 mit dem Schaft 5 realisiert ist. Die Fixierung des Wechselkopfs 7 am Schaft 5 in axialer Richtung erfolgt auch hier mittels einer am Wechselkopf 7 angeordneten, in Figur 3 nicht dargestellten Gewindehülse, in die eine von hinten in den im Schaft 5 eingebrachten Kanal 49 eingeführte Gewindezugstange eingeschraubt wird.

Figur 4 zeigt einen Ausschnitt des anhand der Figuren 1 bis 3 beschriebenen dreischneidigen Werkzeugs 1 im Bereich der ineinander greifenden Verzahnungen 57, 57' (Linearkerbverzahnungen). Es ist zu erkennen, dass das im Betrieb des Werkzeugs 1 vom Schaft 5 zum Wechselkopf 7 beziehungsweise vom Wechselkopf 7 zum Schaft 5 zu übertragende Drehmoment über die aneinander anliegenden Flanken der Zähne der Verzahnungen 57, 57' erfolgt. Aufgrund der hier relativ großen Anzahl der ineinandergreifenden Zähne ist die Gesamtfläche der bei der Drehmomentübertragung beteiligten Flanken der Zähne relativ groß, so dass die darauf wirkenden Kräfte, insbesondere die Flächenpressung, entsprechend gering ist. Daher kann auch bei Bohr-/Aufbohrwerkzeugen 1, die im Querschnitt nur geringe Wandstärken aufweisen, wie zum Beispiel dreischneidige Bohr-/Aufbohrwerkzeuge mit einem relativ kleinen Durchmesser, auch bei der Übertragung von großen Drehmomenten eine Beschädigung des Wechselkopfs und des Schafts mit Sicherheit ausgeschlossen werden.

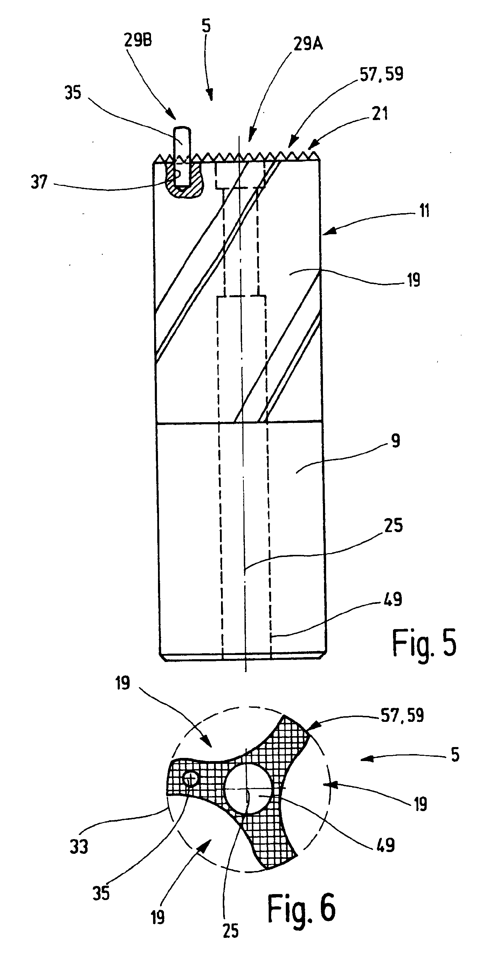

Bei dem anhand der Figuren 1 bis 4 beschriebenen Ausführungsbeispiel des Werkzeugs 1 ist ferner ein weiteres Drehmomentübertragungsmittel 29B vorgesehen, das am Schaft 5 angeordnet ist, und hier von einem kreiszylindrischen Stift 35 gebildet. Das Werkzeug 1 umfasst ferner Drehmomentübertragungsmittel zur drehfesten Kopplung von Schaft 5 und Wechselkopf 7, die zwischen dem Schaft 5 und dem Wechselkopf 7 und in einem radialen Abstand zur Längsmittelachse des Bohr-/Aufbohrwerkzeugs 1 angeordnet sind und die im Folgenden anhand der Figuren näher erläutert werden. Es ist hier ein erstes Drehmomentübertragungsmittel 29 vorgesehen, das bei diesem Ausführungsbeispiel am Schaft 5 angeordnet und von einem Vorsprung 31 gebildet ist, der von der ersten Trennfläche 21 ausgeht, das heißt, aus dieser herausragt (Figur 1). Der Vorsprung 31 weist einen Abstand von einem gedachten, den Bohrlochdurchmesser bestimmenden Umfangskreis 33 auf, der in der Figur 2 mit gestrichelter Linie angedeutet ist. Der Umfangskreis 33 ist durch den radialen Abstand der Schneiden 13 bis 17 von der Längsmittelachse des Werkzeugs 1 definiert. Aus Figur 5 ist ohne weiteres ersichtlich, dass der Vorsprung 31 auch im Abstand zu den Bereichen der Außenmantelfläche des Schafts 5 angeordnet ist, in denen sich die drei Spiralnuten 19 befinden. Der Vorsprung 31 ist also von der Trennfläche 21 praktisch vollständig umgeben und steht domartig über diese hervor.

Der zylindrische Stift 35 ist als Präzisionsstift ausgebildet, der einen kreisrunden Querschnitt aufweist. Der Stift 35 ist in eine von einer Bohrung gebildeten Aufnahme 37 eingesteckt. Der Stift 35 ist in der Aufnahme 37 präzise fixiert, beispielsweise durch einen durch eine Presspassung realisierten Kraftschluss oder durch Stoffschluss, insbesondere durch Verlöten oder Verkleben. Der Stift 35 ist also ein separates Teil, das vorzugsweise erst nach Fertigstellung der ersten Trennfläche 21 am Schaft 5 in der oben beschriebenen Weise angeordnet wird.

Das erste Drehmomentübertragungsmittel 29 wirkt mit einem zweiten Drehmomentübertragungsmittel 39 zusammen, das am Wechselkopf 7 angeordnet ist, da sich das erste Drehmomentübertragungsmittel 29 am Schaft 5 befindet. Es ist also ein zweites Drehmomentübertragungsmitteln 39 vorgesehen, das von einer in die zweite Trennfläche 23 des Wechselkopfs 7 hineingehenden Ausnehmung 41 gebildet ist. Die Ausnehmung weist einen kreisrunden Querschnitt auf und kann beispielsweise durch Bohren oder -sofern der Wechselkopf 7 ein Sinterteil ist- durch einen entsprechenden Kern in einer Sinterform durch Sintern hergestellt werden. Auch das zweite Drehmomentübertragungsmittel 39 ist in einem Abstand zu dem, den Bohrlochdurchmesser bestimmenden Umfangskreis 33 und auch beabstandet zu den übrigen Bereichen der Außenumfangsfläche des Wechselkopfs 7 angeordnet.

Beim Zusammenfügen des Wechselkopfs 7 und des Schafts 5, werden diese in Umfangsrichtung derart zueinander ausgerichtet, dass die Ausnehmung 41 sich in Gegenüberlage zu dem Vorsprung 31 befindet. Durch eine axiale Relativbewegung zwischen Schaft 5 und Wechselkopf 7 wird dann der Vorsprung 31 in die Ausnehmung 41 eingeführt und zwar so weit, bis die Trennflächen 21, 23 aneinander anliegen. Die Zuordnung des Vorsprungs 31 und der Ausnehmung 41 erfolgt derart, dass beim Zusammenfügen des Wechselkopfs 7 und des Schafts 5 diese spiralnutgleich zueinander ausgerichtet sind. Das heißt, die Spannuten 19, von denen ein erster Längsabschnitt am Schaft 5, nämlich im Spiralnutbereich 11, und ein zweiter Längsabschnitt am Wechselkopf 7, nämlich in einem Spiralnutbereich, angeordnet sind, weisen eine durchgehende Schraubenform auf.

Das anhand der Figuren 1 bis 3 beschriebene Ausführungsbeispiel des drei Schneiden aufweisenden Werkzeugs 1 weist die Außenkontur eines bekannten, dreischneidigen Bohr-/Aufbohrwerkzeugs auf, das aus Vollmaterial herausgeschliffen ist, wobei der Übergang vom Spiralnutbereich 43 des Wechselkopfs 7 zum Spiralnutbereich 11 des Schafts 5 vorzugsweise stufenlos ausgebildet ist. Mit anderen Worten, der Wechselkopf 7 und der Schaft 5 weisen im Bereich ihrer Schnittstelle gleiche Querschnittsflächen auf.

Es wird auch deutlich, dass die Anordnung der Drehmomentübertragungsmittel ohne weiteres auch vertauschbar ist, das heißt, das erste Drehmomentübertragungsmittel kann auch am Wechselkopf 7 und die Aufnahme 41 am Schaft 5 angeordnet sein, was keine Auswirkungen auf die Funktion der Drehmomentübertragungsmittel hat.

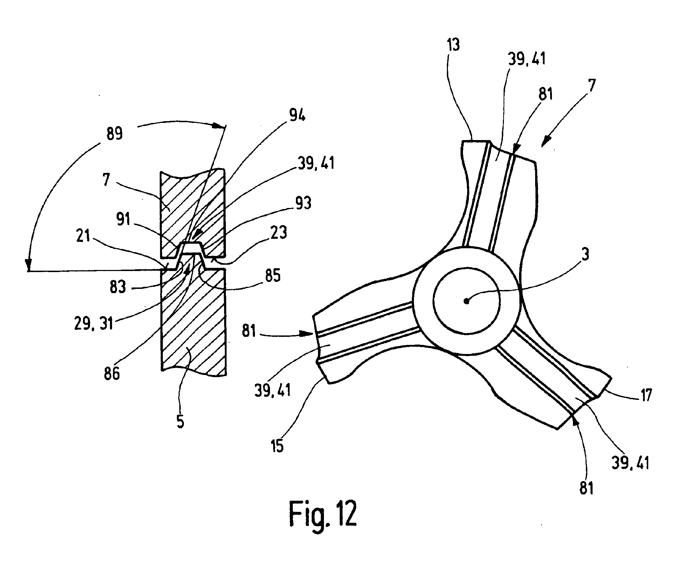

Die primäre Funktion des Stifts 35 besteht darin, den Wechselkopf 7 am Schaft 5 in gewünschter Weise zu positionieren. Hierzu weist der Wechselkopf 7 die Ausnehmung 41 auf (in Figur 12 nicht erkennbar), in die der Stift 35 im montierten Zustand des Wechselkopfs 7 eingreift. Der Stift 35 erfüllt ferner den Zweck, dass über ihn ein Teil des vom Wechselkopf 7 an den Schaft 5 beziehungsweise vom Schaft 5 an den Wechselkopf 7 geleiteten Drehmoments übertragen wird. Festzuhalten bleibt, dass der Stift 35 zur Übertragung der im Betrieb des Werkzeugs 1 auftretenden Drehmomente nicht erforderlich ist, da diese ohne weiteres ausschließlich über die Verzahnungen 57, 57' übertragen werden können. Das heißt, auf den Stift 35 kann gegebenenfalls verzichtet werden.

Das anhand der Figuren 1 bis 4 beschriebene Ausführungsbeispiel des Werkzeugs weist den Vorteil auf, dass die Drehmomentübertragungsmittel, insbesondere die Verzahnungen 57, 57', in einfacher Weise herstellbar sind, beispielsweise durch Herausschleifen aus dem Vollmaterial. Das Werkzeug 1 kann daher kostengünstig hergestellt werden.

Figur 5 zeigt eine Seitenansicht und Figur 6 eine Draufsicht auf ein weiteres Ausführungsbeispiel eines Schafts 5 für das dreischneidige Bohr-/Aufbohrwerkzeugs 1, das sich von dem anhand der Figuren 1 bis 4 beschriebenen Ausführungsbeispiel lediglich dadurch unterscheidet, dass die Drehmomentübertragungsmittel am Schaft 5 und am hier nicht dargestellten Wechselkopf 7 eine als Kreuzkerbverzahnung 59 ausgebildete Verzahnung 57 aufweisen. Die Kreuzkerbverzahnungen 59 sind derart ausgebildet, dass der Wechselkopf 7 am Schaft 5 lagegenau zentriert werden kann, wobei -anders als bei der Linearkerbverzahnung- ein Verrutschen der beiden Teile (Schaft, Wechselkopf) bei ineinandergreifenden Verzahnungen 57 praktisch ausgeschlossen werden kann. Die Kreuzkerbverzahnung 59 wird vorzugsweise in den Wechselkopf 7 und in den Schaft 5 eingeschliffen. Die Kreuzkerbverzahnung 59 ist durch im Querschnitt V-förmige Längsnuten gebildet, von denen eine erste Anzahl nebeneinander angeordnet sind und parallel zueinander verlaufen. Eine zweite Anzahl der V-förmigen Längsnuten verlaufen parallel zueinander und quer zu der ersten Anzahl. Die Querschnittsform der Längsnuten ist variierbar, also nicht auf das in den Figuren 5, 6 dargestellte Ausführungsbeispiel beschränkt.

Das in den Figuren 5 und 6 dargestellte Ausführungsbeispiel umfasst ebenfalls, wie auch das anhand der Figuren 1 bis 4 beschriebene Ausführungsbeispiel, weitere Drehmomentübertragungsmittel, die von einer Zapfen-Loch-Verbindung gebildet ist, wobei der Zapfen von einem am Schaft 5 angeordneten Stift 35 und das Loch an dem zugehörigen, nicht dargestellten Wechselkopf 7 angeordnet ist.

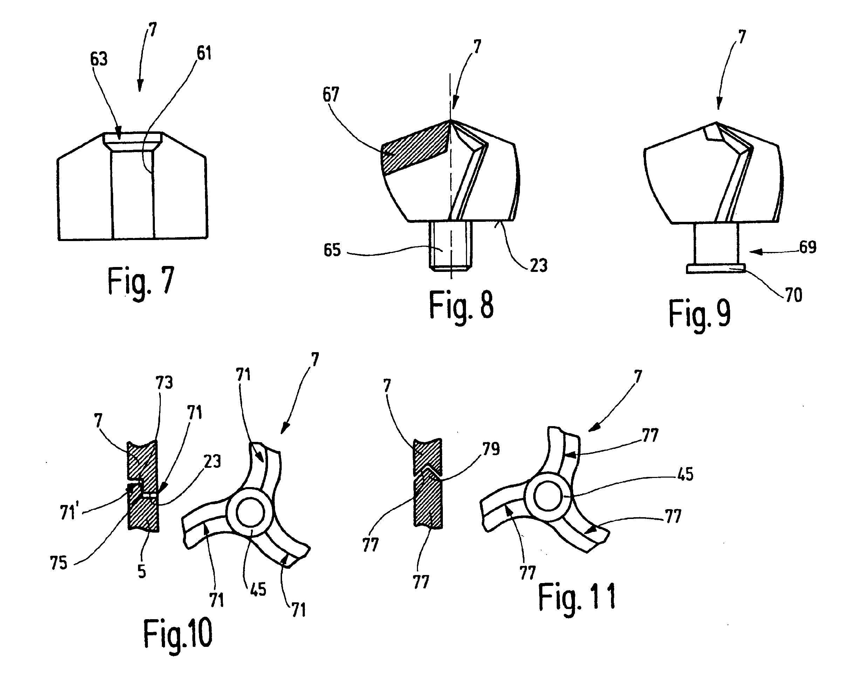

Figuren 7 bis 9 zeigen jeweils eine Seitenansicht eines weiteren Ausführungsbeispiels des dreischneidigen Wechselkopfs 7. Bei dem in Figur 7 dargestellten Ausführungsbeispiel wird der Wechselkopf 7 von oben auf den Schaft 5 (nicht dargestellt) geschraubt. Hierzu weist der Wechselkopf 7 eine in Richtung seiner Längsmittelachse verlaufende Durchgangsöffnung 61 auf, die auf der dem Schaft 5 abgewandten Seite mit einer Vertiefung 63 zur Aufnahme eines Schraubenkopfs versehen ist. Der Wechselkopf 7 wird stirnseitig auf den Schaft 5 aufgesetzt, wobei die Schraube die Durchgangsöffnung 61 durchgreift und in ein entsprechendes Innengewinde am Schaft 5 beziehungsweise einem am Schaft 5 angeordneten Haltemittel eingeschraubt wird. Im montierten Zustand des Wechselkopfs 7 ist der Kopf der Schraube vorzugsweise vollständig in der Vertiefung 63 angeordnet, steht also nicht in axialer Richtung über die Stirnseite des Wechselkopfs 7 über. Die Drehmomentübertragungsmittel können beispielsweise mindestens eine Zapfen-Loch-Verbindung oder eine Linear- oder Kreuzkerbverzahnung, wie sie oben beschrieben wurden, umfassen.

Bei dem in Figur 8 dargestellten Ausführungsbeispiel des Wechselkopfs 7 weist dieser einen über seine zweite Trennfläche 23 hervorstehenden Gewindebolzen 65 auf, der in eine entsprechende Gewindebohrung oder dergleichen am Schaft 5 einschraubbar ist, wodurch der Wechselkopf 7 mit dem Schaft 5 drehfest und gleichzeitig auch in axialer Richtung gesichert verbunden wird. Mit schraffierter Fläche 67 an einer der Schneiden ist angedeutet, dass der Wechselkopf 7 mit PKD oder CBM bestückt ist, was auch bei allen anderen Ausführungsbeispielen des Wechselkopfs ohne weiteres möglich ist.

Bei dem in Figur 9 dargestellten Ausführungsbeispiel des Wechselkopfs 7 ist zur drehfesten Verbindung zwischen Wechselkopf 7 und Schaft 5 ein an sich bekannter Bajonettverschluss 69 vorgesehen. Am Wechselkopf 7 befindet sich ein konzentrisch zur Längsmittelachse verlaufender Zapfen, an dem ein Schließteil 70 des Bajonettverschlusses 69 angeordnet beziehungsweise ausgebildet ist. Im montierten Zustand des Wechselkopfs 7 greift das Schließteil 70 in eine entsprechend ausgebildete Aufnahme am Schaft 5, wodurch eine drehfeste Verbindung und gleichzeitig eine Fixierung des Wechselkopfs 7 in axialer Richtung am Schaft 5 realisiert wird.

Die rechte Abbildung der Figur 10 zeigt eine Untersicht eines Ausführungsbeispiels des Wechselkopfs 7, bei dem erste Drehmomentübertragungsmittel mindestens eine, hier insgesamt drei in die zweite Trennfläche 23 eingebrachte Stufen 71 umfassen, die in einem radialen Abstand zur Drehachse des Wechselkopfs 7 angeordnet sind. Diese weisen jeweils einen parallel zur Längsmittel-/Drehachse des Wechselkopfs 7 verlaufende Wand 73 auf, die als Widerlager für jeweils eine entsprechend ausgebildete Wand 75 am Schaft 5 zur Übertragung des Drehmoments im Betrieb des Werkzeugs 1 dienen. Die Wände 73 weisen hier -in Draufsicht gesehen- eine Krümmung auf, die in etwa der Außenkontur des Wechselkopfs 7 folgt. Die linke Abbildung der Figur 10 zeigt einen Ausschnitt des Werkzeugs 1 im Bereich der Verbindungsstelle zwischen Wechselkopf 7 und Schaft 5. Es ist deutlich zu erkennen, dass der Schaft 5 ebenfalls Stufen 71' zur Ausbildung der Wände 75 aufweist. Die Drehmomentübertragung erfolgt hier also durch Formschluss. Die Wände 73, 75 können ohne weiteres auch gegenüber der Längsmittel-/Drehachse des Wechselkopfs 7 geneigt sein. Wichtig ist, dass jeweils zumindest ein radial außenliegender Wandabschnitt nicht quer zur Drehachse des Wechselkopfs verläuft, wodurch eine Drehmomentübertragung nicht möglich wäre.

Figur 11 zeigt ein weiteres Ausführungsbeispiel des Wechselkopfs 7, bei dem die Drehmomentübertragung durch Formschluss erfolgt. Die rechte Abbildung der Figur 11 zeigt eine Untersicht des Wechselkopfs 7, bei dem erste Drehmomentübertragungsmittel mehrere in die zweite Trennfläche 23 eingebrachte, V-förmige Vertiefungen 77 aufweisen, die in einem radialen Abstand von der Längsmittelachse des Wechselkopfs 7 angeordnet sind. In diese greift jeweils ein Vorsprung 79 am Schaft 5 formschlüssig ein, wie aus der linken Abbildung der Figur 11, die einen Ausschnitt des Werkzeugs 1 im Bereich der Verbindungsstelle zwischen Wechselkopf 7 und Schaft 5 zeigt, ersichtlich. Der Vorsprung 79 ist hier entsprechend der Form der Vertiefung 77 keilförmig und spitz zulaufend ausgebildet. Die anhand der Figur 11 beschriebene Formschlussverbindung wird auch als Prismenverbindung bezeichnet.

Figur 12 zeigt ein weiteres Ausführungsbeispiel des Wechselkopfs 7. Auch bei diesem Ausführungsbeispiel erfolgt -wie bei den Ausführungsbeispielen der Figuren 10 und 11- die Drehmomentübertragung durch Formschluss. Beim Ausführungsbeispiel der Figur 12 handelt es sich um ein dreischneidiges Werkzeug mit drei Spiralnuten und drei Spiralerhebungen, wobei jeder Spiralerhebung ein Drehmomentübertragungsmittel zugeordnet ist. Nachstehend wird der Einfachheit halber wegen der Gleichheit nur auf ein Drehmomentübertragungsmittel eingegangen. Die rechte Abbildung der Figur 12 zeigt eine Untersicht des Wechselkopfs 7, bei dem die das zweite Drehmomentübertragungsmittel 39 bildende Ausnehmung 41 in radialer Richtung zur Drehachse 3 eine geradlinige Längserstreckung bis an die Außenumfangsfläche 81 des Bohr-/Aufbohrwerkzeugs 1 aufweist. Da die Spiralerhebungen jeweils eine bogenförmige Form aufweisen und die Ausnehmungen 41 geradlinig verlaufen, ergibt sich über die Länge der Ausnehmungen 41 ein unterschiedlich großer Abstand zu den Spiralnuten. Entsprechendes gilt für die drei Vorsprünge 31. In die Ausnehmung 41 greift der das erste Drehmomentübertragungsmittel 29 bildende Vorsprung 31 des Schafts 5 formschlüssig ein, wie aus der linken Abbildung der Figur 12 ersichtlich ist, die im Schnitt einen Ausschnitt des Bohr-/Aufbohrwerkzeugs 1 im Bereich der Verbindungsstelle zwischen dem Wechselkopf 7 und dem Schaft 5 zeigt. Der Vorsprung 31 und die Ausnehmung 41 sind -im Querschnitt gesehen- trapezförmig ausgebildet, das heißt die Außenkontur des Vorsprungs 31 und die Innenkontur der Ausnehmung 41 weisen jeweils im Querschnitt eine Trapezform auf, sind also eckig ausgebildet. Die Trapezform ist derart angeordnet, dass die an die erste Trennfläche 21 angrenzenden Wände 83, 85 -ausgehend von der ersten Trennfläche 21- schräg aufeinander zulaufen, so dass der Abstand der Wände 83, 85 zueinander jeweils an ihrer von der ersten Trennfläche 21 abgewandten Seite kleiner ist als der Abstand der Wände 83, 85 an ihrer der ersten Trennfläche 21 zugewandten Seite. Die Wände 83, 85 stehen in diesem Ausführungsbeispiel also nicht senkrecht auf der ersten Trennfläche 21, sondern sind um einen stumpfen Winkel 89 geneigt angeordnet. In diesem Ausführungsbeispiel beträgt der Winkel 89 etwa 105°. Der Winkel 89 kann auch einen größeren oder kleineren Wert aufweisen oder auch 90° betragen, so dass -im letztgenannten Fall- die Trapezform verlassen wird. Die obere Fläche 86 des Trapezes verläuft parallel zur Trennfläche 21.

Die Innenkontur der Ausnehmung 41 entspricht der Außenkontur des Vorsprungs 31, das heißt, den Wänden 83, 85 und 86 des Vorsprungs 31 entsprechen hinsichtlich Lage und Größe die Wände 91, 93 und 94 der Ausnehmung 41. Die Höhe des Vorsprungs entspricht der Tiefe der Ausnehmung, so dass die Trennflächen 21, 23 im montierten Zustand aneinander liegen. Möglich ist es auch, dass die Wände 83, 85 des Vorsprungs 31 und/oder die Vorsprungshöhe und/oder die Ausnehmungstiefe so ausgebildet sind, dass im montierten Zustand des Wechselkopfs 7 ein Spalt zwischen der ersten Trennfläche 21 und der zweiten Trennfläche 23 und/oder zwischen der Wand 86 des Vorsprungs 31 und der den Boden der Ausnehmung 41 bildenden Wand 94 verbleibt.

Das in diesem Ausführungsbeispiel dargestellte gesamte Drehmomentübertragungsmittel umfasst insgesamt drei sich jeweils entsprechende Vorsprünge 31 und Ausnehmungen 41, die in Umfangsrichtung in einem Winkelabstand von 120° gleichmäßig verteilt angeordnet sind. Die Vorsprünge 31 und Ausnehmungen 41 sind im Bereich ihrer jeweiligen Trennfläche 21 beziehungsweise 23 derart flächenmäßig groß angeordnet, dass bei dem Schaft 5 beziehungsweise bei dem Wechselkopf 7 -im Querschnitt gesehen- relativ kleine Abstände zu den Spiralnuten bestehen, so dass eine feste und sichere Verbindung zwischen dem Wechselkopf 7 und dem Schaft 5 gewährleistet werden kann. Es wird eine besonders sichere und definierte Verbindung erzeugt, die aufgrund der geometrisch einfachen Gestaltung der Drehmomentübertragungsmittel zusätzlich einfach fertigungstechnisch herzustellen ist.

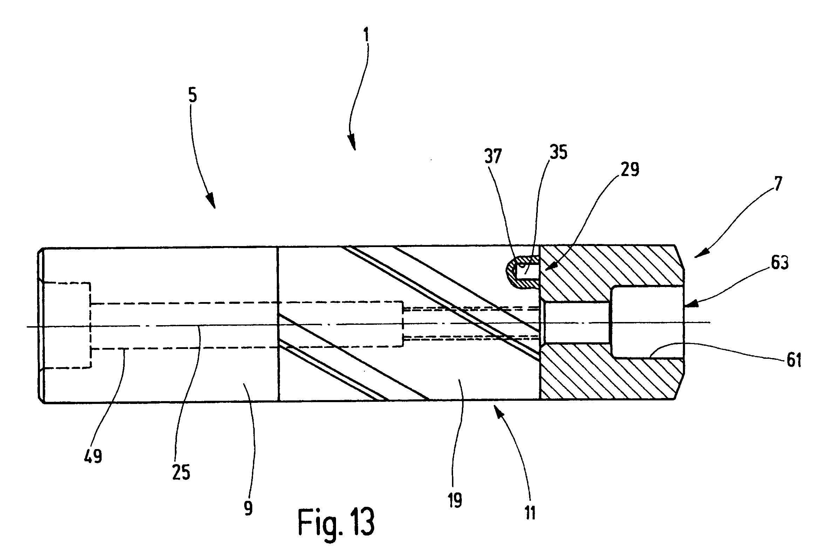

Figur 13 zeigt ein weiteres Ausführungsbeispiel des dreischneidigen Bohr-/Aufbohrwerkzeugs 1, das einen Wechselkopf 7 umfasst, wie er anhand der Figur 7 beschrieben wurde. Das heißt, der Wechselkopf 7 wird zur Sicherung in axialer Richtung am Schaft 5 von vorne mit demselben verschraubt. Hierzu wird eine nicht dargestellte Schraube durch die Durchgangsöffnung 61 im Wechselkopf 7 hindurch gesteckt und in eine nicht dargestellte, im Kanal 49 des Schafts 5 angeordnete Gewindezugstange eingeschraubt.

Der Schaft 5 des in Figur 13 dargestellten Werkzeugs kann beispielsweise aus einem Stahl mit der Bezeichnung 30CrNiMo8 hergestellt sein, während der Wechselkopf 7 aus Vollhartmetall mit der Bezeichnung K30 besteht. Es können selbstverständlich ohne weiteres auch andere Materialien für den Wechselkopf und den Schaft verwendet werden.

Zusammenfassend bleibt festzuhalten, dass die vorstehend beschriebenen unterschiedlichen Drehmomentübertragungsmittel miteinander kombinierbar sind, das heißt, an einem Werkzeug können gleichzeitig mehrere unterschiedlich ausgestaltete Drehmomentübertragungsmittel vorgesehen sein, mittels denen der Wechselkopf und der Schaft drehfest und gegebenenfalls gleichzeitig in axialer Richtung fixiert verbunden werden. Die erfindungsgemäße Ausgestaltung der Drehmomentübertragungsmittel ist auch nicht auf dreischneidige Bohr- und/ Aufbohrwerkzeuge beschränkt. Die vorstehend beschriebenen Drehmomentübertragungsmittel können daher auch ohne weiteres bei Bohr- und/oder Aufbohrwerkzeugen vorgesehen werden, die einen Wechselkopf mit lediglich einer Schneide, zwei Schneiden oder gegebenenfalls auch mehr als drei Schneiden, beispielsweise vier Schneiden aufweisen.

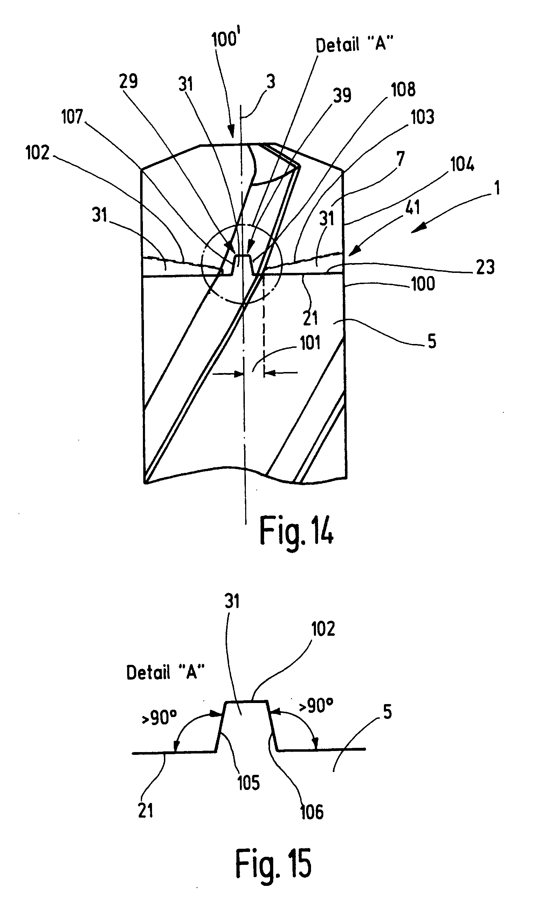

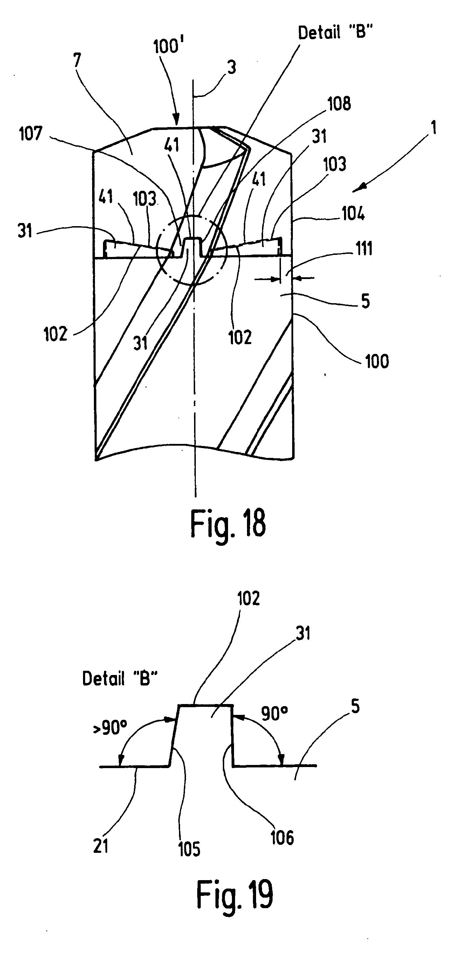

Die Figuren 14 bis 21 zeigen weitere Ausführungsbeispiele eines erfindungsgemäßen Bohr- und/oder Aufbohrwerkzeugs 1, wobei diese Figuren insbesondere Aufbohrwerkzeuge enthalten, da die Befestigung des Wechselkopfs 7 am Schaft 5 mittels eines als Gewindeschraube ausgebildeten Befestigungsmittels erfolgt, das eine entlang der Längsmittelachse 3 verlaufende zentrale Durchgangsöffnung des Wechselkopfs 7 durchgreift, sich mit einem Kopf am Wechselkopf 7 abstützt und dessen Gewinde in eine zentrale Gewindebohrung des Schaftes 5 eingeschraubt ist. Die Gewindebohrung verläuft entlang der Längsmittelachse 3. Die Details sind hinsichtlich dieses Befestigungsmittels in den Figuren 18 und 21 der Übersichtlichkeit halber nicht dargestellt.

Die Ausführungsbeispiele des Bohr-/Aufbohrwerkzeugs 1 der Figuren 14 bis 21 entspricht im Hinblick auf die Drehmomentübertragungsmittel zur drehfesten Kupplung von Schaft 5 und Wechselkopf 7 dem Ausführungsbeispiel der Figur 12. Insofern gelten die zur Figur 12 vorliegenden Ausführungen, wobei nachstehend nur auf die Besonderheiten der Ausführungsbeispiele der Figuren 14 bis 21 zum Ausführungsbeispiel der Figur 12 eingegangen werden soll. Diese Besonderheiten bestehen vor allem darin, dass die Drehmomentübertragungsmittel erste Drehmomentübertragungsmittel 29 aufweisen , die als Vorsprünge 31 am Schaft 5 ausgebildet sind. Vorzugsweise handelt es sich um mehrere, gleichmäßig winkelversetzt um die Längsmittelachse 3 herum angeordnete, einstückig mit dem Schaft 5 ausgebildete Vorsprünge 31. Bevorzugt sind drei um 120° zueinander versetzt liegende Vorsprünge 31 vorgesehen.

Aus der Figur 14 wird deutlich, dass die Vorsprünge 31 vom äußeren Rand 100 des Schaftes 5 ausgehen und sich radial in Richtung auf die Längsmittelachse 3 erstrecken, wobei sie zur Längsmittelachse 3 einen Abstand 101 aufweisen, wodurch hinreichend Platz für den Eingriff des als Gewindeschraube ausgebildeten, nicht dargestellten Befestigungsmittels für die Befestigung des Wechselkopfs 7 am Schaft 5 gegeben ist. Der Kopf der Gewindeschraube wird in einer axialen Stufenbohrung 100' aufgenommen. Ferner ist von besonderer Bedeutung, dass die Höhe jedes Vorsprungs 31 über die Längserstreckung (radiale Richtung) des Vorsprungs 31 nicht konstant ist, sondern -von außen nach innen gesehen- kleiner wird. So beträgt die Höhe des Vorsprungs 31 am Rand 100 den größten Wert und nimmt dann kontinuierlich ab, so dass am gegenüberliegenden Ende jedes Vorsprungs 31 eine geringere Höhe vorliegt. Die Anordnung kann derart getroffen sein, dass die Höhe am innenliegenden Ende vom Abstand 101 bestimmt wird, indem die ebene, schräge Oberfläche 102 jedes Vorsprungs 31 derart geneigt verläuft, dass ein gedachtes verlängertes Ende bis auf Höhe des Kreuzungspunktes von Trennfläche 21 und Längsmittelachse 3 reicht und diesen Schnittpunkt ebenfalls schneidet. Durch den Abstand 101 von der Längsmittelachse 3 ergibt sich daher für jeden Vorsprung 31 am innenliegenden Ende eine Resthöhe.

Insgesamt ist erkennbar, dass aufgrund des schrägen Verlaufs der Oberfläche 102 jedes Vorsprungs 31 eine größere Vorsprungshöhe im äußeren Bereich vorliegt als im innenliegenden Bereich. Dies führt dazu, dass -im Zusammenhang mit dem zweiten Drehmomentübertragungsmittel 39, nämlich einer jedem Vorsprung 31 zugeordneten nutförmigen Ausnehmung 41 des Wechselkopfs- im peripheren Bereich des Bohr/Aufbohrwerkzeugs 1 größere Drehmomente übertragbar sind, als im weiter innenliegenden Bereich, was der Beanspruchungscharakteristik entspricht.

Zur Ausnehmung 41 jedes Vorsprungs 31 ist anzumerken, dass diese entsprechend der äußeren Formgebung des zugehörigen Vorsprungs 31 ausgebildet ist, also ebenfalls einen schräg verlaufenden Nutgrund 103 aufweist, wobei die Tiefe der Ausnehmung 41 im Bereich des Randes 104 des Wechselkopfs 7 entsprechend größer ist als im weiter innenliegenden Bereich. Der Nutgrund 103 ist ebenfalls als schräge Ebene ausgebildet und entspricht daher dem Verlauf der Oberfläche 102 des zugeordneten Vorsprungs 31. Aus der Figur 15 ist erkennbar, dass die beiden Seiten 105 und 106 jedes Vorsprungs 31 zueinander konvergieren -von der Trennfläche 21 ausgehend in Richtung auf die Oberfläche 102 betrachtet-, wobei jede Seite 105, 106 zur zugeordneten Trennfläche 21 einen Winkel > 90°, insbesondere im Bereich von 95° bis 120°, vorzugsweise 100°, aufweist. Die beiden aus der Figur 15 hervorgehenden Winkel sind gleich groß.

Die Ausnehmung 41 ist hinsichtlich ihrer aus der Figur 14 hervorgehenden Seiten 107, 108 formangepasst entsprechend der Ausbildung des zugeordneten Vorsprungs 31 ausgestaltet, das heißt, die Seiten 107, 108 der Ausnehmung 41 sind als schräg stehende Ebenen ausgebildet, die zum Nutgrund 103 hin konvergieren. Der jeweils bestehende Winkel zwischen der zweiten Trennfläche 23 des Wechselkopfs 7 und der zugehörigen Seite 107 beziehungsweise 108 der Ausnehmung 41 ist entsprechend ebenfalls > 90° ausgebildet, vorzugsweise im Bereich von 95° bis 120°, insbesondere 100°.

Die Anordnung ist derart getroffen, dass die vorstehend näher erläuterten Winkel von Ausnehmung 41 und Vorsprung 31 gleich groß ausgebildet sind.

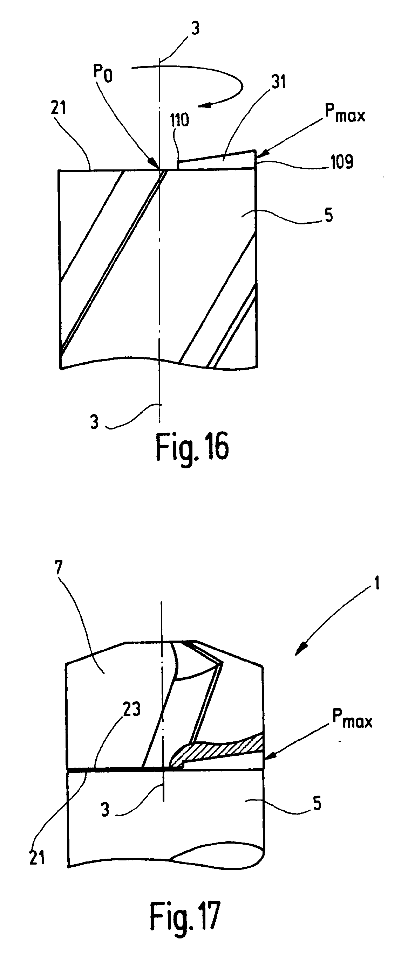

Die Figur 16 verdeutlicht, dass beim Übertragen eines Drehmoments vom Schaft 5 auf den nicht dargestellten Wechselkopf 7•das peripher außen liegende Ende 109 jedes Vorsprungs 31 das maximale Drehmoment Pₘₐₓ aufbringen muss, während das innenliegende Ende 110 mit einem geringeren Drehmoment beaufschlagt wird. Im Bereich der Längsmittelachse 3 liegt das Drehmoment P₀ vor, das gleich null ist. Da dieser Punkt zum Ende 110 den Abstand 101 aufweist, übertragen die Seiten 106 beziehungsweise 107 des Vorsprungs 31 im Bereich des Endes 110 ein entsprechendes Drehmoment, das -in radialer Richtung nach außen gesehen- kontinuierlich zunimmt.

Die Figur 17 verdeutlicht das Vorhergesagte nochmals, wobei dort dem Schaft 5 der Wechselkopf 7 zugeordnet ist.

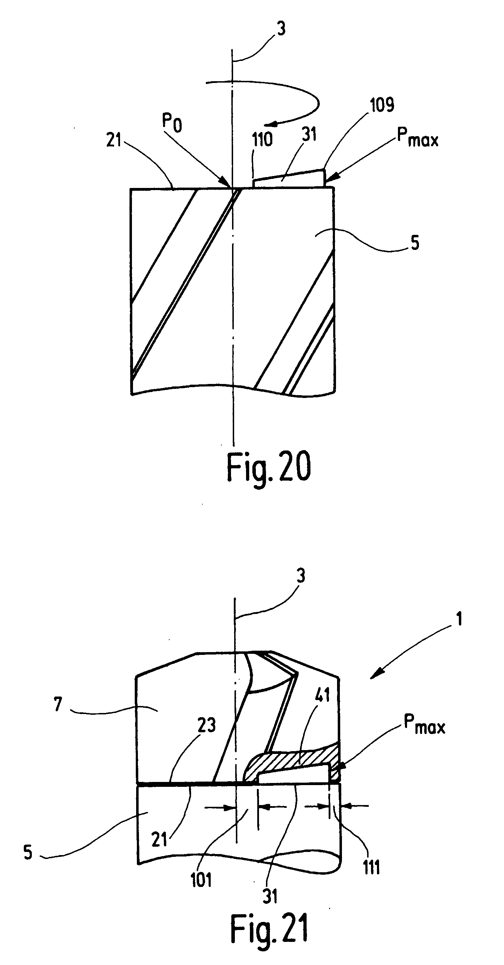

Das Ausführungsbeispiel der Figuren 18 bis 21 entspricht im Wesentlichen dem Ausführungsbeispiel der Figuren 14 bis 17, so dass auf die Ausführungen Bezug genommen wird. Unterschiedlich ist lediglich, dass sich die Vorsprünge 31 und entsprechend die Ausnehmungen 41 nicht bis zum äußeren Rand 100 beziehungsweise 104 erstrecken, sondern dass zu diesen Rändern ein radialer Abstand 111 vorliegt. Hierdurch sind Vorsprung 31 und Ausnehmung 41 von außen her nicht sichtbar. Aus Figur 20 wird deutlich, dass das maximale Drehmoment Pₘₐₓ insofern von dem entsprechend weiter innenliegenden Ende 109 des Vorsprungs 31 beziehungsweise der Ausnehmung 41 aufgebracht werden muss.

Alle zuvor beschriebenen Ausführungsbeispiele und auch das zuletzt genannte Ausführungsbeispiel kann Flankenwinkel des Vorsprungs 31 beziehungsweise entsprechende Winkel der Seiten der Ausnehmung 41 aufweisen, so wie sie aus der Figur 15 hervorgehen. Alternativ ist es jedoch auch möglich, dass die Winkel gemäß der Figur 19 beim Vorsprung 31 und der Ausnehmung 41 realisiert sind. Das bedeutet, dass die Seite 105 des Vorsprungs zur zugehörigen Trennfläche 21 einen Winkel > 90°, insbesondere 95° bis 120°, insbesondere 100°, aufweist, während die andere Seite 106 zur zugehörigen Trennfläche 21 einen rechten Winkel von 90° besitzt. In entsprechender Weise sind die Seiten 107 und 108 der Ausnehmung 41 gestaltet, das heißt, hier liegt ebenfalls einmal ein Winkel > 90° und einmal ein 90°-Winkel vor.

Insbesondere kann beim Ausführungsbeispiel der Figur 19 vorgesehen sein, dass das Drehmoment von der Fläche 106 des Vorsprungs 31 auf die zugehörige, ebenfalls einen 90°-Winkel aufweisende Seite 108 der Ausnehmung 41 übertragen wird, das heißt, der Vorsprung 31 überträgt das Drehmoment mit einer Seite, die einen Winkel von 90° zur Trennfläche 21 aufweist auf eine Seite 108 der Ausnehmung 41, die ebenfalls einen 90°-Winkel aufweist. Dies hat zur Folge, dass keine Kraftkomponenten bei der Drehmomentübertragung auftreten, die den Wechselkopf 107 vom Schaft 5 trennen wollen. Insofern ist eine optimale Drehmomentübertragung realisiert. In einem solchen Falle ist jedoch gleichfalls sichergestellt, dass die Oberfläche 102 des Vorsprungs 31 und der Nutgrund 103 der Ausnehmung 41 entsprechend den Ausführungen zur Figur 14 schräg verlaufen.

Zusammenfassend bleibt festzuhalten, dass durch die erfindungsgemäße Ausgestaltung der Drehmomentübertragungsmittel eine feste und drehsichere Verbindung zwischen Wechselkopf und Schaft sichergestellt werden kann.

## Patentansprüche

1. Vorzugsweise mindestens eine Schneide, insbesondere drei Schneiden aufweisendes Bohr- beziehungsweise Aufbohrwerkzeug (1) mit einem einen Spiralnutbereich (11) aufweisenden Schaft (5) mit einer Stirngeometrie, **dadurch gekennzeichnet, dass** die Stirngeometrie an einem wechselbaren Wechselkopf (7) angeordnet ist, und dass zwischen dem Schaft (5) und dem Wechselkopf (7) Drehmomentübertragungsmittel vorgesehen sind.

2. Bohr- beziehungsweise Aufbohrwerkzeug nach Anspruch 1, **dadurch gekennzeichnet, dass** die Drehmomentübertragungsmittel am Schaft (5) und am Wechselkopf (7) jeweils mindestens eine stirnseitig vorgesehene Verzahnung (57) aufweisen beziehungsweise von diesen gebildet sind, wobei die Verzahnungen (57) im montierten Zustand des Wechselkopfs (7) ineinander greifen.

3. Bohr- beziehungsweise Aufbohrwerkzeug nach Anspruch 2, **dadurch gekennzeichnet, dass** mindestens eine der Verzahnungen (57) als Linearkerbverzahnung (58) oder Kreuzkerbverzahnung (59) ausgebildet ist.

4. Bohr- beziehungsweise Aufbohrwerkzeug nach einem der vorhergehenden Ansprüche, **dadurch gekennzeichnet, dass** die Drehmomentübertragungsmittel mindestens einen von einer ersten Trennfläche (21) des Schafts (5) oder einer zweiten Trennfläche (23) des Wechselkopfs (7) ausgehenden Vorsprung (31) und ein mindestens eine in die zweite oder die erste Trennfläche (21,23) hineingehende Ausnehmung (41) umfassen, wobei im montierten Zustand des Wechselkopfs (7) der Vorsprung (31) in der Ausnehmung (41) angeordnet ist und die Verzahnungen (57) am Wechselkopf (7) und am Schaft (5) ineinander greifen.

5. Bohr- beziehungsweise Aufbohrwerkzeug nach einem der vorhergehenden Ansprüche, **dadurch gekennzeichnet, dass** der Schaft (5) und der Wechselkopf (7) zumindest in ihrem Verbindungsbereich gleiche Querschnittsflächen besitzen.

6. Bohr- beziehungsweise Aufbohrwerkzeug nach einem der vorhergehenden Ansprüche, **dadurch gekennzeichnet, dass** der Wechselkopf (7) am Schaft (5) mittels einer Schraubverbindung oder eines Bajonettverschlusses (69) gehalten ist.

7. Bohr- beziehungsweise Aufbohrwerkzeug nach einem der vorhergehenden Ansprüche, **dadurch gekennzeichnet, dass** der Schaft (5) und der Wechselkopf (7) an ihren einander zugewandten Stirnseiten ein die Drehmomentübertragungsmittel bildende Profilierung aufweisen.

8. Bohr- beziehungsweise Aufbohrwerkzeug nach einem der vorhergehenden Ansprüche, **dadurch gekennzeichnet, dass** der Vorsprung (31) und die Ausnehmung (41) eine Längserstreckung in radiale Richtung zur Drehachse (3) aufweisen.

9. Bohr- beziehungsweise Aufbohrwerkzeug nach einem der vorhergehenden Ansprüche, **dadurch gekennzeichnet, dass** der Vorsprung (31) und die Ausnehmung (41) in Richtung ihrer Längserstreckung geradlinig ausgebildet sind.

10. Bohr- beziehungsweise Aufbohrwerkzeug nach einem der vorhergehenden Ansprüche, **dadurch gekennzeichnet, dass** der Vorsprung (31) und die Ausnehmung (41) sich bis an die Außenumfangsfläche (81) des Bohr- beziehungsweise Aufbohrwerkzeugs (1) erstrecken.

11. Bohr- beziehungsweise Aufbohrwerkzeug nach einem der vorhergehenden Ansprüche, **dadurch gekennzeichnet, dass** die Außenkontur des Vorsprungs (31) und die Innenkontur der Ausnehmung (41) eckig, insbesondere trapezförmig, ausgebildet sind, wobei die Ausnehmung (41) auf den Vorsprung (31) insbesondere passgenau aufsteckbar ist.

12. Bohr- beziehungsweise Aufbohrwerkzeug (1) mit einem einen Spiralnutbereich (11) aufweisenden Schaft (5) mit einer Stirngeometrie, insbesondere nach einem der Ansprüche 1 bis 11, **dadurch gekennzeichnet, dass** die Stirngeometrie an einem wechselbaren Wechselkopf (7) angeordnet ist, dass zwischen dem Schaft (5) und dem Wechselkopf (7) Drehmomentübertragungsmittel vorgesehen sind, und dass die Drehmomentübertragungsmittel (29,39;39A bis 39C;29A bis 29C) mit Abstand (x) von einem gedachten, den Bohrlochdurchmesser bestimmenden Umfangskreis (33) angeordnet sind.

13. Bohr- beziehungsweise Aufbohrwerkzeug (1) mit einem einen Spiralnutbereich (11) aufweisenden Schaft (5) mit einer Stirngeometrie, insbesondere nach einem der Ansprüche 1 bis 11, **dadurch gekennzeichnet, dass** die Stirngeometrie an einem wechselbaren Wechselkopf (7) angeordnet ist, dass zwischen dem Schaft (5) und dem Wechselkopf (7) Drehmomentübertragungsmittel vorgesehen sind, und dass die Drehmomentübertragungsmittel am Schaft (5) und am Wechselkopf (7) jeweils mindestens eine stirnseitig angeordnete Verzahnung (57;57') aufweisen beziehungsweise von diesen gebildet sind, wobei die Verzahnungen (57;57') im montierten Zustand des Wechselkopfs (7) ineinander greifen.

14. Bohr- beziehungsweise Aufbohrwerkzeug nach Anspruch 12 oder 13, **gekennzeichnet durch** einen Schaft (5), einen Wechselkopf (7) sowie Drehmomentübertragungsmittel nach einem oder mehreren Ansprüchen 1 bis 11.

15. Bohr- beziehungsweise Aufbohrwerkzeug nach einem der vorhergehenden Ansprüche, **dadurch gekennzeichnet, dass** ein erstes Drehmomentübertragungsmittel (29) mindestens einen Vorsprung aufweist, der am Schaft angeordnet ist und von der Trennfläche (21) ausgeht und dass ein zweites Drehmomentübertragungsmittel mindestens eine Ausnehmung (41) aufweist, die am Wechselkopf ausgebildet ist und von der Trennfläche (23) ausgeht.

16. Bohr- beziehungsweise Aufbohrwerkzeug nach einem der vorhergehenden Ansprüche, **dadurch gekenn** **zeichnet,** dass mehrere Vorsprünge und Ausnehmungen vorgesehen sind.

17. Bohr- beziehungsweise Aufbohrwerkzeug nach einem der vorhergehenden Ansprüche, **dadurch gekennzeichnet, dass** die Vorsprünge und Ausnehmungen jeweils gleichmäßig winkelbeabstandet zueinander liegen.

18. Bohr- beziehungsweise Aufbohrwerkzeug nach einem der vorhergehenden Ansprüche, **dadurch gekennzeichnet, dass** jeweils drei, um 120° winkelversetzt zueinanderliegende Vorsprünge und Ausnehmungen vorgesehen sind.

19. Bohr- beziehungsweise Aufbohrwerkzeug nach einem der vorhergehenden Ansprüche, **dadurch gekennzeichnet, dass** die Drehmomentübertragungsmittel entsprechend von dem äußeren Rand des Schaftes und dem äußeren Rand des Wechselkopfs ausgehen.

20. Bohr- beziehungsweise Aufbohrwerkzeug nach einem der vorhergehenden Ansprüche, **dadurch gekennzeichnet, dass** sich die Drehmomentübertragungsmittel -von dem jeweiligen äußeren Rand ausgehend- bis zu einer gedachten Umkreislinie erstrecken, deren Mittelpunkt auf der Längsmittelachse (3) liegt, so dass die Drehmomentübertragungsmittel einen radialen Abstand zur Längsmittelachse (3) aufweisen.

21. Bohr- beziehungsweise Aufbohrwerkzeug nach einem der vorhergehenden Ansprüche, **dadurch gekennzeichnet, dass** die Höhe des Vorsprungs -in radialer Richtung von außen nach innen gesehen- kleiner wird.

22. Bohr- beziehungsweise Aufbohrwerkzeug nach einem der vorhergehenden Ansprüche, **dadurch gekennzeichnet, dass** sich die Höhe des Vorsprungs nach innen hin kontinuierlich verkleinert.

23. Bohr- beziehungsweise Aufbohrwerkzeug nach einem der vorhergehenden Ansprüche, **dadurch gekennzeichnet, dass** die Tiefe der Ausnehmung -in radialer Richtung von außen nach innen- abnimmt.

24. Bohr- beziehungsweise Aufbohrwerkzeug nach einem der vorhergehenden Ansprüche, **dadurch gekennzeichnet, dass** die Tiefe der Ausnehmung von außen nach innen kontinuierlich abnimmt.

25. Bohr- beziehungsweise Aufbohrwerkzeug nach einem der vorhergehenden Ansprüche, **dadurch gekennzeichnet, dass** die im Wesentlichen radial verlaufenden Seiten des Vorsprungs -in Richtung auf den Wechselkopf gesehen- zueinander konvergieren.

26. Bohr- beziehungsweise Aufbohrwerkzeug nach einem der vorhergehenden Ansprüche, **dadurch gekennzeichnet, dass** die Seiten des Vorsprungs als ebene Flächen ausgebildet sind.

27. Bohr- beziehungsweise Aufbohrwerkzeug nach einem der vorhergehenden Ansprüche, **dadurch gekennzeichnet, dass** das Konvergieren der Seiten des Vorsprungs dadurch erfolgt, dass beide Seiten des Vorsprungs zur Trennfläche (21) einen Winkel aufweisen, der größer als 90° ist oder dass eine Seite des Vorsprungs zur Trennfläche (21) einen Winkel von 90° und die andere Seite des Vorsprungs zur Trennfläche (21) einen Winkel größer 90° aufweist.

28. Bohr- beziehungsweise Aufbohrwerkzeug nach einem der vorhergehenden Ansprüche, **dadurch gekennzeichnet, dass** die Vorsprünge -im Querschnitt- eine gleichmäßige Trapezform aufweisen.

29. Bohr- beziehungsweise Aufbohrwerkzeug nach einem der vorhergehenden Ansprüche, **dadurch gekennzeichnet, dass** zum spielfreien radialen und axialen Zusammengreifen die Ausnehmung dem Vorsprung in der Formgebung formangepasst ausgebildet ist.

30. Bohr- beziehungsweise Aufbohrwerkzeug nacht einem der vorhergehenden Ansprüche, **dadurch gekennzeichnet, dass** der Wechselkopf mittels eines lösbaren Befestigungsmittels am Schaft auswechselbar gehalten ist.

31. Bohr- beziehungsweise Aufbohrwerkzeug nach einem der vorhergehenden Ansprüche, **dadurch gekennzeichnet, dass** das Befestigungsmittel ein Gewindebolzen/eine Gewindeschraube ist, die eine zentrale Durchgangsöffnung des Wechselkopfs durchgreift, sich mit einem Kopf oder einer Stufe am Wechselkopf abstützt und in eine zentrale Gewindebohrung des Schaftes eingeschraubt ist.

32. Bohr- beziehungsweise Aufbohrwerkzeug nach einem der vorhergehenden Ansprüche, **dadurch gekennzeichnet, dass** der Kopf beziehungsweise die Stufe des Befestigungsmittels versenkt im Wechselkopf angeordnet ist.

33. Bohr- beziehungsweise Aufbohrwerkzeug nach einem der vorhergehenden Ansprüche, **dadurch gekenn** **zeichnet**, dass auch der Wechselkopf (7) einen Spiralnutbereich (43) aufweist.
